# EUROPEAN PATENT APPLICATION

(11) **EP 2 975 317 A1**
(43) Date of publication of application: **20.01.2016**
(21) Application number: 14177116.2
(22) Date of filing: 15.07.2014
(51) Int. Cl.: F17D 1/05, F17D 3/00, F16L 53/00

(54) **Method for controlling heating and communication in a pipeline system**

(71) Applicant: Siemens Aktiengesellschaft, 80333 München (DE)
(72) Inventor: Kristiansen, Karstein, 7051 Trondheim (NO)

(57) **Abstract**

A method for controlling a pipeline system (100) comprises:
a first step (10) during which an electrical heating source (120) is powered for heating the pipeline system (100),
a second step (20) during which the electrical heating source (120) is switched off and at least a sensor (110) along the pipeline system (100) is powered for measuring a physical property and communicating the measured data to a remote communication destination.

## Description

### Field of invention

The present invention relates to a method for controlling a pipeline system, in particular a pipeline system including heating and communication devices. The present invention relates to a control device for the implementation of the method above.

### Art background

In the field of offshore oil and/or gas production pipeline systems are normally used. In particular, at offshore oilfields, subsea pipelines are used to transport the multiphase mixture of oil, gas and water from producing wells to the processing facilities on the land. Several kilometres of pipeline run on the seabed for this purpose.

Pipelines are typically provided with a heating system. The oil and or gas products inside the pipeline normally exit from a well at high temperature and pressure, but must be kept warm along the pipeline in order to avoid the formation of plugs. This may become critical particularly during production shut-downs. Considering the fact that a pipeline typical length is in the order of several kilometres the electrical current passing in the heating system is normally high and the magnetic field generated is proportional to this current.

On known heating system is the so-called Direct Electrical Heating (DEH), which is based on the use of the metallic pipeline as one thermal conductor and of a cable, which may be referred to as "piggyback" cable, connected to the metallic pipeline, as another thermal conductor.

The pipeline is provided with a coating for isolating the pipeline from the contact with sea water, in order to prevent corrosion, which in addition also helps in preventing heating power from the heating system to be lost towards the external environment.

Along the pipeline a plurality of sensors are normally installed for remotely monitoring the conditions of the pipeline itself and promptly detect any damage or problem. The sensors communicate the measured valued to a pipeline monitor and control centre which could either be inshore or offshore. For example, PH sensors may be provided for indirect measurement of corrosion or pressure sensors for monitoring any excessive pressure drop along the pipeline which may be due to a leak. Mass flow rate sensors may also be installed for detecting leaks. Ultra sound transducers could also be used for corrosion measurements and strain gauge sensors used for displacement measurements along the pipeline.

The main drawback of such a layout structure is represented by the fact that the transferring of data from the sensors to the control centre is so disturbed to be practically muted by the electromagnetic field generated by the heating system.

### Summary of the Invention

It is an object of the invention to provide a method and a control device for controlling a pipeline system which overcomes at least part of the above and/or other drawbacks.

More in particular, it may be an object of the present invention to provide a method and a control device for efficiently controlling both heating and communication of measured data in a pipeline system, in order that communication of data measured along the pipeline system is not influenced by any strong electromagnetic field generated by any electrical heating system.

In order to achieve the objects defined above, a method and a control device for controlling a pipeline system according to the independent claim is provided. The dependent claims describe advantageous developments and modifications of the invention.

According to a first aspect of the present invention, a method for controlling a pipeline system, the pipeline system comprising:
a pipeline portion,
an electrical heating source distributed along the pipeline portion, and
at least one sensor on the pipeline portion for measuring a physical property along the pipeline portion, the sensor comprising communication means for communicating the measured data to a remote communication destination,
   the method comprising:
a first step during which the electrical heating source is powered for heating the pipeline portion,
a second step during which the electrical heating source is switched off and the sensor is powered for measuring a physical property and communicating the measured data to the communication destination.

Advantageously, switching off the electrical heating source assures that each sensor communicates without being disturbed by the strong electromagnetic field created by the heating process. Time of operation can therefore be advantageously divided into two different time frames, for two different tasks, respectively: heating and sensor operations (i.e. measuring communicating data).

According to another exemplary embodiment of the present invention, the first step and the second step are executed immediately one after the other.

According to another exemplary embodiment of the present invention, the first step and the second step are periodically executed, each time period including an execution of one of the first step and second step immediately followed by an execution of the other of the first step and second step.

Advantageously, the first heating step and the second step of measuring and transmitting the physical properties are executed alternatively, thus making it possible to program automatically the switching on and off of both the two steps of the method.

According to another exemplary embodiment of the present invention, the duration of second step is less than 2% shorter than the duration of the first step, more preferably less than 1% shorter.

Advantageously, thanks to the thermal inertia of the pipeline portion and to the coating, which prevents heating power to be lost towards the external environment, the heating system can be switched for short period of times, compared to the time during which the heating system is switched on. Shortness of the second step with respect to the first step is nevertheless sufficient to assure a proper functioning of the sensors, both in terms of properties measurements and data transmission.

According to a second aspect of the present invention, a control system is associated to a pipeline system for controlling the execution of the steps of the method above described.

The same advantages mentioned with reference to the first aspect of the present invention can be achieved also by the second aspect of the invention.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic view of a pipeline system managed by a method according to the present invention,
Fig. 2 shows a schematic block view of a sensor for the pipeline of fig. 1,
Fig. 3 shows a diagram illustrating two steps of the method according to the present invention.

### Detailed Description

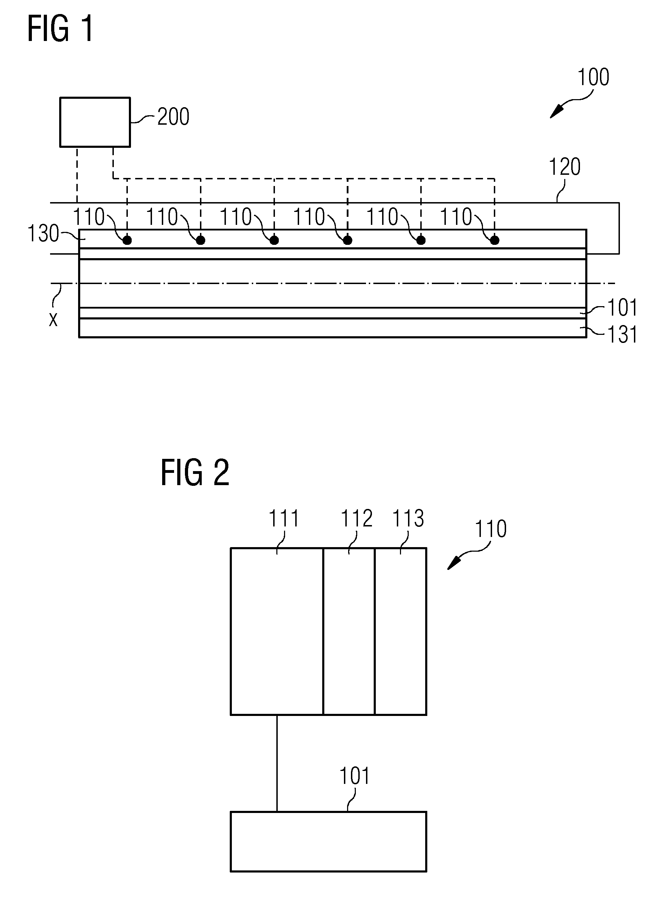

Fig. 1 shows a pipeline system 100 according to the present invention.

The pipeline system 100 include a metallic pipeline portion 101 which may be used in a subsea installation for connecting a well in an offshore oil and/or gas extraction field to an inshore processing facility, for example a refinery. According to different embodiments of the present invention, the pipeline portion 101 may coincide with an entire subsea pipeline, extending on the seabed from a well to an inshore processing facility, or it may be only a part of it.

The pipeline system 100 further includes a coating 130 for protecting the pipeline portion 101 from the contact with the sea water, which generates corrosions. Processes and materials used in the coating process are conventional and known in the art and for this reason not describes in further detail. The coating provides an external smooth cylindrical surface 131 to the pipeline portion 101.

The pipeline system 100 further includes a plurality of sensors 110, in contact with the pipeline portion 101. Sensors typically used along a pipeline installation are:
- electrical or electrochemical sensors for corrosion detection,
- PH sensors for indirect corrosion detection,
- pressure sensors for monitoring pressure drops along the pipeline portion 101 and possibly detect leaks through excessive pressure drop detection,
- mass flow rate sensors, for monitoring the quantity of oil and/or gas transferred along the pipeline and detect leaks,
- temperature sensor, for controlling that oil and/or gas inside the pipeline are above a desired level, in order to avoid plug formation,
- other sensors.

A sensor 110 is schematically shown in fig. 2. Each sensor 110 includes a probe 111 for the measurement of a respective physical property, for example PH or pressure or temperature. The probe is directly connected to the pipeline portion 101 for the measurement of the respective physical property. Each sensor 110 also includes an electronic circuit 112 for receiving and transmitting the measured property to a control and monitoring centre, which may be either offshore or inshore, and a reserve of charge 113 for powering the sensor 110.

The electronic circuit 112 may also, according to possible embodiments of the present invention, elaborate, for example filter the measured data, before their transmission.

The communication between the sensors 110 and the control and monitoring centre takes place wirelessly along the pipeline. The measured value propagates from sensor to sensor via radio frequency, until it reaches the end of the pipeline. According to other embodiments of the present invention, other types of communication, different from a communication involving radio frequency, may be envisaged.

According to the present invention, the reserve of charge 113 may be of any type, for example a conventional battery to be changed with a new battery of the same type when run off of charge or a rechargeable battery to periodically recharged. The pipeline system 100 includes also a Direct Electric Heating (DEH) which comprises a metallic cable 120 (normally referred to as "piggyback" cable) connected to the metallic wall of the pipeline portion 101. The current, flowing in the cable 120 and in the pipeline wall, transfers heat to pipeline and through the pipeline to the oil and/or gas products inside the pipeline, which can be therefore kept above a desired temperature, thus avoiding plug formation. The metallic cable 120 is also a magnetic field source creating an electromagnetic field in which the sensors 110 are immersed. Therefore, when the metallic cable 120 is switched on for heating the pipeline, thus preventing the formation of plugs along it, it also disturbs the optimal working of any sensor 110 installed along the pipeline portion 101.

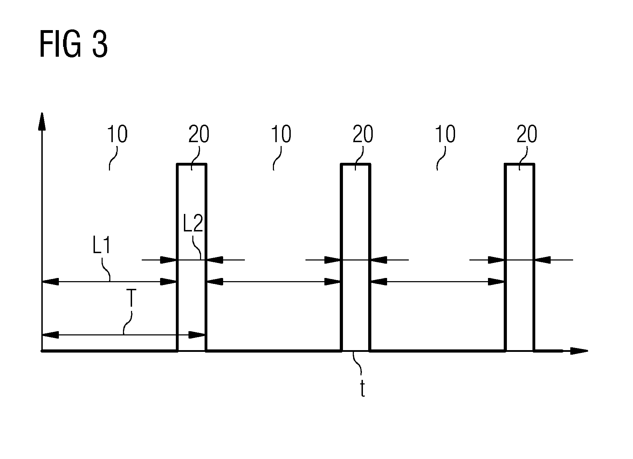

With reference to fig. 3, a method for controlling the pipeline system 100, comprises a first step 10 during which the electrical cable 120 is powered for heating the pipeline portion 101, followed by a second step 20 during which the electrical heating source 120 is switched off and the sensor 110 is powered for measuring a physical property and communicating the measured data.

The metallic cable 120 providing the magnetic field source for the charging of each accumulator 113 can be periodically switched off without prejudicing its function of heating the pipeline portion 101 and preventing plug formation, thanks to the thermal inertia of the metallic wall of the pipeline portion 101 and to the coating 130, which prevents heating power to be lost towards the external environment.

The first step 10 has a duration L1 typically in the range of hours. The second step 20 has a duration L2 typically in the range of minutes, i.e. the duration of second step 20 is less than 2% shorter than the duration of the first step 10, or, more preferably the duration of second step 20 is less than 1% shorter than the duration of the first step 10.

The first and second steps 10, 20 are periodically executed, each period having a duration T, which is the sum of L1 and L2.

The alternative execution of the first and second steps 10, 20 can be therefore also be programmed in and executed automatically in the time domain t, as represented in fig. 3. The time intervals during which the metallic cable 120 is switched off are conveniently used by the plurality of sensors 110 transmitting the respective measured physical properties to the control and monitoring centre. The data transmission will not be disturbed by the magnetic field of the metallic cable 120.

The pipeline system 100 includes a control device 200 for the implementation of the steps of the method of the present invention, in particular for controlling the alternative execution of the first and second steps 10, 20. The control device 200 is connected to the metallic cable 120 for controlling the switching on and switching off of the metallic cable 120. The control device 200 may be also connected wirelessly to the sensors 110 for receiving the measured data which propagates along the pipeline, for example via radio frequency.

## Claims

1. A method for controlling a pipeline system (100), the pipeline system (100) comprising:
a pipeline portion (101),
an electrical heating source (120) distributed along the pipeline portion (101), and
at least one sensor (110) on the pipeline portion for measuring a physical property along the pipeline portion (101), the sensor comprising communication means (112) for communicating the measured data to a remote communication destination,
the method comprising:
a first step (10) during which the electrical heating source (120) is powered for heating the pipeline portion (101),
a second step (20) during which the electrical heating source (120) is switched off and the sensor (110) is powered for measuring a physical property and communicating the measured data to the communication destination.

2. The method according to claim 1, wherein one of the first step (10) and second step (20) is executed immediately after the other of the first step (10) and second step (20).

3. The method according to claim 2, wherein the first step (10) and the second step (20) are periodically executed, each time period including an execution of one of the first step (10) and second step (20) immediately followed by an execution of the other of the first step (10) and second step (20).

4. The method according to claim 1, wherein the duration of second step (20) is less than 2% shorter than the duration of the first step (10).

5. The method according to claim 4, wherein the duration of second step (20) is less than 1% shorter than the duration of the first step (10).

6. A control system (200) associated to a pipeline system (100) for controlling the execution of the steps of the method according to any of the previous claims.
